# EUROPEAN PATENT APPLICATION

(11) **EP 4 184 348 A1**
(43) Date of publication of application: **24.05.2023**
(21) Application number: 21842162.6
(22) Date of filing: 13.07.2021
(51) Int. Cl.: G06F 16/535, G06F 16/538, G06F 3/0482

(54) **INFORMATION RETRIEVAL METHOD AND APPARATUS AND ELECTRONIC DEVICE**

(30) Priority: 14.07.2020 CN 202010674732
(71) Applicant: Hangzhou Hikvision Digital Technology Co., Ltd., Hangzhou, Zhejiang 310051 (CN)
(72) Inventor: HAO, Xianyi, Hangzhou, Zhejiang 310051 (CN); SHI, Jie, Hangzhou, Zhejiang 310051 (CN); LUO, Qie, Hangzhou, Zhejiang 310051 (CN); XU, Zhenze, Hangzhou, Zhejiang 310051 (CN); GUO, Xu, Hangzhou, Zhejiang 310051 (CN); LV, Zhen, Hangzhou, Zhejiang 310051 (CN)
(74) Representative: BRP Renaud & Partner mbB Rechtsanwälte Patentanwälte Steuerberater
(86) International application number: PCT/CN2021/105950
(87) International publication number: WO 2022/012508

(57) **Abstract**

Embodiments of the present application provide an information retrieval method, apparatus, and an electronic device. The method includes: obtaining a retrieval image, wherein the retrieval image includes at least one retrieval target; obtaining an image of the at least one retrieval target, and displaying an image list, wherein the image list includes the image of the at least one retrieval target; in case that an image of any retrieval target of the at least one retrieval target is selected in the image list, displaying, in an emphasized manner in the retrieval image, the retrieval target corresponding to the selected image; obtaining a retrieval instruction for the selected image of the retrieval target, and performing retrieval based on the selected image of the retrieval target. The electronic device can display the image list, so that a user can easily and accurately select an image of a target to be retrieved in the image list. As images of retrieval targets do not overlap in the image list, it is not likely to result in misoperations, which can improve ease of user operations, facilitate information retrieval, and improve user experience.

## Description

The present application claims the priority to a Chinese Patent Application No. 202010674732.4 filed with the China National Intellectual Property Administration on July 14, 2020 and entitled "Information Retrieval Method, Apparatus and Electronic device", which is incorporated herein by reference in its entirety.

### Technical Field

The present application relates to the technical field of information retrieval, and in particular to an information retrieval method, apparatus and electronic device.

### Background

In scenarios such as video surveillance, information retrieval is often required, and images are mainly used as retrieval conditions in the information retrieval process. When performing information retrieval, according to the similarity between a target image to be retrieved and each of stored captured images from monitoring devices, a matching captured image can be retrieved from the stored captured images, and the matching captured image can be used as the retrieval result.

In the above-mentioned related technologies, the user needs to select the target to be retrieved through operations such as clicking on the original image.

Since there are very likely to be multiple targets in the original image, and there are overlapping portions among the multiple targets, it is easy for the user to operate incorrectly and fail to select the target to be retrieved, which is difficult to operate and is not conducive to information retrieval, which results in poor user experience.

### Summary

The objective of embodiments of the present application is to provide an information retrieval method, apparatus, and an electronic device, so as to improve user experience when performing information retrieval. The specific technical scheme is as follows:

In a first aspect, an embodiment of the present application provides an information retrieval method, the method comprising:
obtaining a retrieval image, wherein the retrieval image includes at least one retrieval target;
obtaining an image of the at least one retrieval target, and displaying an image list, wherein the image list includes the image of the at least one retrieval target;
in case that an image of any retrieval target of the at least one retrieval target is selected in the image list, displaying, in an emphasized manner in the retrieval image, the retrieval target corresponding to the selected image;
obtaining a retrieval instruction for the selected image of the retrieval target, and performing retrieval based on the selected image of the retrieval target.

In a second aspect, an embodiment of the present application provides an information retrieval method, the method including:
obtaining location information of a target monitoring device determined based on a retrieval condition, wherein the retrieval condition includes an image of a retrieval target and candidate monitoring devices, the target monitoring device is a monitoring device that has captured images among which there is a captured image matching the image of the retrieval target, among the candidate monitoring devices included in the retrieval condition;
displaying, on a map, an identifier indicating that the target monitoring device has captured an image of the retrieval target based on the location information.

In a third aspect, an embodiment of the present application provides an information retrieval apparatus, including:
a first image obtaining module, configured for obtaining a retrieval image, wherein the retrieval image includes at least one retrieval target;
an image list display module, configured for obtaining an image of the at least one retrieval target, and displaying an image list, wherein the image list includes the image of the at least one retrieval target;
an emphasized display module, configured for, in case that an image of any retrieval target of the at least one retrieval target is selected in the image list, displaying, in an emphasized manner in the retrieval image, the retrieval target corresponding to the selected image;
an information retrieval module, configured for obtaining a retrieval instruction for the selected image of the retrieval target, and performing retrieval based on the selected image of the retrieval target.

In a fourth aspect, an embodiment of the present application provides an information retrieval apparatus, including:
an location information obtaining module, configured for obtaining location information of a target monitoring device determined based on a retrieval condition, wherein the retrieval condition includes an image of a retrieval target and candidate monitoring devices, the target monitoring device is a monitoring device that has captured images among which there is a captured image matching the image of the retrieval target, among the candidate monitoring devices included in the retrieval condition;
a fourth identifier display module, configured for displaying, on a map, an identifier indicating that the target monitoring device has captured an image of the retrieval target based on the location information.

In a fifth aspect, the embodiment of the present application provides an electronic device, including a processor and a memory, wherein:
the memory is configured to store a computer program;
the processor is configured to implement any of the method steps described above when executing the program stored in the memory.

In a sixth aspect, an embodiment of the present application provides a computer-readable storage medium containing instructions which, when executed by a computer, causes the computer to implement any of the method described above.

In a seventh aspect, the embodiments of the present application provide a computer program product containing instructions, which, when executed by a computer, cause the computer to implement any of the method steps described above.

Implementation of any embodiment of the present application does not necessarily require achieving all of the advantages described below at the same time.

In one or more embodiments provided in the present application, the electronic device can obtain a retrieval image, wherein, the retrieval image includes at least one retrieval target; obtain an image of the at least one retrieval target, and display an image list, wherein the image list includes the image of the at least one retrieval target; in case that an image of any retrieval target of the at least one retrieval target is selected in the image list, display, in an emphasized manner in the retrieval image, the retrieval target corresponding to the selected image; obtain a retrieval instruction for the selected image of the retrieval target, and perform retrieval based on the selected image of the retrieval target. The electronic device can display the image list, and display, in an emphasized manner, the retrieval target corresponding to the selected image in case that an image of any retrieval target of the at least one retrieval target is selected in the image list, so that a user can easily and accurately select an image of a target to be retrieved in the image list. As images of retrieval targets do not overlap in the image list, it is not likely to result in misoperations, which can improve ease of user operations, facilitate information retrieval, and improve user experience.

In one or more embodiments provided in the present application, the electronic device can obtain location information of a target monitoring device determined based on a retrieval condition, the retrieval condition including: an image of a retrieval target image and candidate monitoring devices, the target monitoring device being: the monitoring device that has captured images among which there is a captured image matching the image of the retrieval target, among the candidate monitoring devices included in the retrieval condition; display, on a map, an identifier indicating that the target monitoring device has captured an image of the retrieval target based on the location information. The electronic device can display, on a map, an identifier indicating that the target monitoring device has captured an image of the retrieval target based on the location information of the target monitoring device, so that the user can conveniently view the retrieval results, and can know the positional relationship of the target monitoring device in space and know the location where the retrieval target once appeared, which can improve user experience.

### Brief Description of the Drawings

In order to describe the technical solutions of embodiments of the present application or of the prior art more clearly, the drawings required in the description of the embodiments and of the prior art will be briefly described below. Obviously, the drawings described below are just for some embodiments of the present application and other drawings may be obtained by those of ordinary skills in the art based on these drawings without any creative effort.
Fig. 1 is a flow chart of the first information retrieval method according to an embodiment of the present application;
Fig. 2(a) is a schematic view of a retrieval image according to an embodiment of the present application;
Fig. 2(b) is a schematic view of an image list according to an embodiment of the present application;
Fig. 2(c) is another schematic view of a retrieval image according to an embodiment of the present application;
Fig. 2(d) is another schematic view of an image list according to an embodiment of the present application;
Fig. 3(a) is another schematic view of a retrieval image according to an embodiment of the present application;
Fig. 3(b) is another schematic view of an image list according to an embodiment of the present application;
Fig. 4 is a flow chart of a second information retrieval method according to an embodiment of the present application;
Fig. 5 is a specific flow chart of step S402 in the embodiment shown in Fig. 4;
Fig. 6 is a flow chart of the presentation mode of the captured image based on the embodiment shown in Fig. 4;
Fig. 7 is a schematic view of the display effect of the map image according to an embodiment of the present application;
Fig. 8 is a flow chart showing the display mode of the identifier indicating that the target monitoring device has captured an image of the retrieval target based on the embodiment shown in Fig. 4;
Fig. 9 is another schematic view of the display effect of the map image according to an embodiment of the present application;
Fig. 10 is a schematic view of the display effect of a travel trajectory according to an embodiment of the present application;
Fig. 11 is a schematic structural view of a first information retrieval apparatus according to an embodiment of the present application;
Fig. 12 is a schematic structural view of a second information retrieval apparatus according to an embodiment of the present application;
Fig. 13 is a schematic structural view of a first electronic device according to an embodiment of the present application;
Fig. 14 is another schematic structural view of a first electronic device according to an embodiment of the present application;
Fig. 15 is a schematic structural view of a second electronic device according to an embodiment of the present application;
Fig. 16 is another schematic structural view of a second electronic device according to an embodiment of the present application.

### Detailed Description

In order to make the objectives, technical solutions and advantages clearer, the present application will be further described in detail below with reference to the accompanying drawings and embodiments. Apparently, the described embodiments are only some of the embodiments of the present application, not all of them. All other embodiments obtained by those of ordinary skill in the art based on the embodiments in the present application fall within the protection scope of the present application.

In order to improve ease of user operations, facilitate information retrieval, and improve user experience, embodiments of the present application provide an information retrieval method, apparatus, an electronic device, a computer readable storage medium, and a computer program product.

A first information retrieval method according to an embodiment of the present application is introduced below. The first information retrieval method according to the embodiment of the present application can be applied to any electronic device that needs to retrieve information, which can be, for example, a cell phone, a computer, a monitoring terminal, etc., and is not specifically limited here. For clear description, it is referred to below generally as an electronic device.

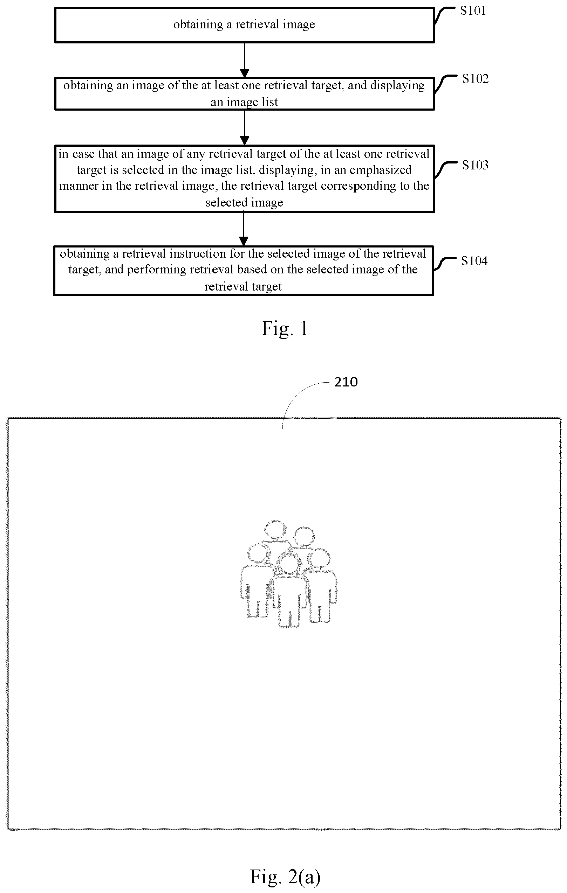

As shown in Fig. 1, an information retrieval method includes:
S101, obtaining a retrieval image;
wherein, the retrieval image includes at least one retrieval target.
S 102, obtaining an image of the at least one retrieval target, and displaying an image list;
wherein, the image list includes the image of the at least one retrieval target.
S 103, in case that an image of any retrieval target of the at least one retrieval target is selected in the image list, displaying, in an emphasized manner in the retrieval image, the retrieval target corresponding to the selected image;
S104, obtaining a retrieval instruction for the selected image of the retrieval target, and performing retrieval based on the selected image of the retrieval target.

It can be seen that in the solution according to the embodiment of the present application, an electronic device can obtain a retrieval image, wherein, the retrieval image includes at least one retrieval target; obtain an image of the retrieval target, and displaying an image list, wherein, the image list includes the image of the at least one retrieval target; in case that an image of any retrieval target of the at least one retrieval target is selected in the image list, display, in an emphasized manner in the retrieval image, the retrieval target corresponding to the selected image; obtain a retrieval instruction for the selected image of the retrieval target, and perform retrieval based on the selected image of the retrieval target. The electronic device can display the image list, and display, in an emphasized manner, the retrieval target corresponding to the selected image in case that an image of any retrieval target of the at least one retrieval target is selected in the image list, so that a user can easily and accurately select an image of a target to be retrieved in the image list. As images of retrieval targets do not overlap in the image list, it is not likely to result in misoperations, which can improve ease of user operations, facilitate information retrieval, and improve user experience.

When there is a need to retrieve information, a user can select or provide a retrieval image to be retrieved, wherein, the retrieval image includes at least one retrieval target, which can be a living creature, a building, a car, etc., and is not specifically limited here.

The above-described retrieval image can be an image uploaded by a user, or an image selected by the user from images stored in the electronic device, or an image selected from images stored in a device in communication connection with the electronic device, or an image captured by the user using a camera of the electronic device, which are all appropriate.

For example, the electronic device is installed with a monitoring client terminal through which an image captured by a monitoring platform during monitoring of a store A can be viewed. Thus, when a user wants to retrieve relevant information of a target R, a monitoring image including the target R can be selected as the retrieval target.

In order to clearly present a retrieval target and facilitate user operations, the electronic device can execute the above-described step S102, i.e., obtaining an image of the at least one retrieval target, and displaying an image list. In this step, the image list includes the image of the at least one retrieval target.

In an implementation, the electronic device can extract an image of each retrieval target from the retrieval image and display it in the image list. Thus, the image of each retrieval target can be displayed clearly without overlapping, which facilitates the selection of a retrieval target to be retrieved by a user. In another implementation, the electronic device can send the retrieval image to a retrieval device, and the retrieval device then extracts an image of each retrieval target from the retrieval image and sends it to the electronic device. The electronic device can then display the image of each retrieval target in the image list.

In another implementation, the image of the retrieval target can be an image capable of characterizing the retrieval target obtained from another means. In other words, the image of the retrieval target can be an image in which the retrieval target can be clearly seen by a user and may not be an image of an area of the retrieval image where the retrieval target is located. For example, the retrieval image is an image including a plurality of targets. Thus, the image of the retrieval target can be a separate image of each target or an image only including that one target.

In this implementation, an image of each retrieval target can be stored in advance in a retrieval device. The electronic device can then send the retrieval image to the retrieval device. The retrieval device, after recognizing the retrieval target in the retrieval image, can send an image corresponding to the recognized retrieval target to the electronic device. Then, the electronic device can display the image of the retrieval target in the image list.

Wherein, there may be one or multiple retrieval targets in the retrieval image, the number of which is not specifically limited here. If there is one retrieval target in the retrieval image, the image of only this retrieval target is displayed in the image list; if there are multiple retrieval targets in the retrieval image, the separate image of each of the plurality of retrieval targets is displayed in the image list. In other words, there is a one-to-one correspondence between the image of the retrieval target and the retrieval target.

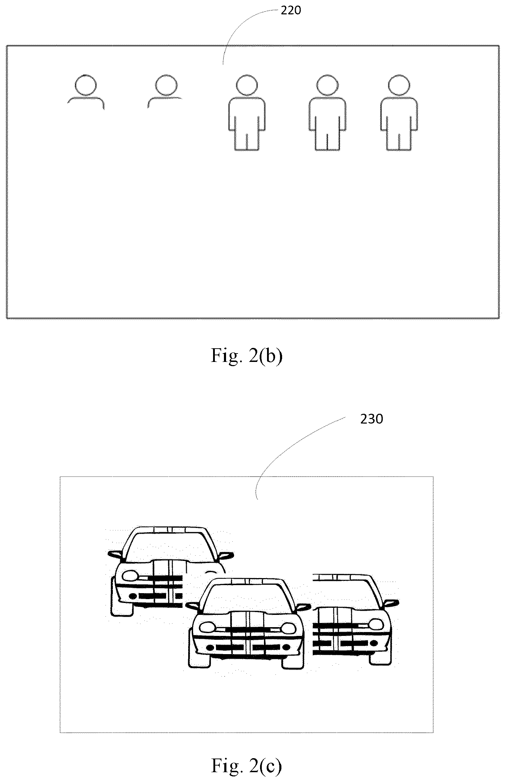

For example, the retrieval image 210 shown in Fig. 2(a) includes five retrieval targets. The electronic device extracts images of these five retrieval targets from the retrieval image 210, and then displays the image list 220 as shown in Fig. 2(b). The image list 220 displays the separate image of each retrieval target of these five retrieval targets.

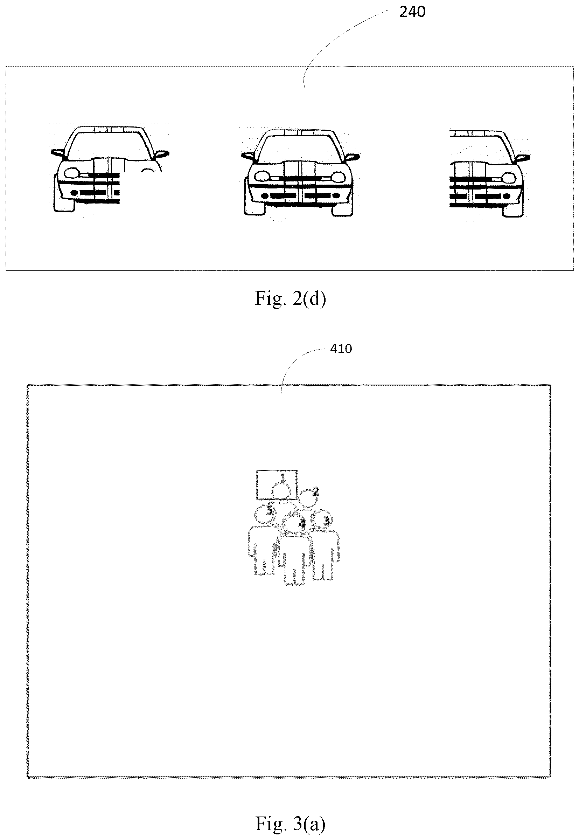

As another example, the retrieval image 230 shown in Fig. 2(c) includes three retrieval targets. The electronic device extracts images of these three retrieval targets from the retrieval image 230, and then displays the image list 240 as shown in Fig. 2(d). The image list 240 displays the separate image of each retrieval target of these three retrieval targets.

The user, after viewing the above-described image list, can select the image of a retrieval target to be retrieved by the user from the image list. In the case where the user selects an image of any retrieval target in the image list, the electronic device can execute the above-described step S103, i.e., displaying, in an emphasized manner in the retrieval image, the retrieval target corresponding to the selected image. In an implementation, the user can select an image of the retrieval target in the image list by means of operations such as clicking and long pressing. Thus, the image of the retrieval target selected by the user is the image of the retrieval target to be retrieved.

Wherein, the means of displaying in an emphasized manner can be any one of displaying in bold, displaying with glowing, displaying in shadow, or using different lines or colors, which are all appropriate and are not specifically limited here.

Then, in the above-described step S 104, the electronic device can obtain a retrieval instruction for the selected image of the retrieval target, and then perform retrieval based on the selected image of the retrieval target. In an implementation, a user interface such as a retrieval button and a confirmation button can be provided for a user to confirm the performance of a retrieval operation by means of the user interface after the user selects an image of any retrieval target in the image list.

After obtaining the retrieval instruction, if the electronic device does not have a retrieval function, the electronic device can send a retrieval request containing the image of the retrieval target selected by the user to a retrieval device, so that the retrieval device performs retrieval in monitoring images stored in advance based on the image of the retrieval target. This retrieval device and the retrieval device mentioned in the above-described step S102 can be the same device or different devices, which are both appropriate and are not specifically limited here.

The retrieval device can be an intelligent device capable of image recognition. The retrieval device, after receiving the image of the retrieval target, can perform retrieval in monitoring images stored in advance in order to search for a monitoring image matching the image of the retrieval target. Wherein, the monitoring image can be an image captured by a monitoring device, or an image contained in a monitoring video captured by a monitoring device, which are both appropriate.

For example, a monitoring image stored by the retrieval device in advance is an image captured when monitoring a store A. Then, the retrieval device, after receiving an image of the retrieval target contained in a retrieval request, can search for a captured image matching the image of the retrieval target from the captured images and return it to the electronic device. If the image of the retrieval target is an image of target B, the retrieval device can search for a captured image containing the target B and return it to the electronic device. Thus, the user can view the captured images and complete information retrieval.

As the electronic device can obtain an image of the retrieval target and display the image list, a user can easily and accurately select an image of the retrieval target to be retrieved in the image list, which is not likely to result in misoperations and can improve ease of user operations and facilitate information retrieval.

As an implementation of an embodiment of the present application, obtaining an image of the at least one retrieval target can include:
determining location information of the retrieval target in the retrieval image; extracting an image of the retrieval target from the retrieval image based on the location information of the retrieval target.

In order to accurately extract an image of the retrieval target from the retrieval image, the electronic device can first determine the location information of the retrieval target in the retrieval image. The location information can be information capable of representing the location of the retrieval target in the retrieval image. For example, it can be any one of the coordinates of diagonal corner points, length and width and coordinates of vertices of a rectangular box capable of representing the location of the retrieval target in the retrieval image. Of course, it can also be other information capable of representing the location of the retrieval target in the retrieval image and is not specifically limited here.

As an implementation, if the electronic device has a target recognition function, the electronic device can perform target recognition on the retrieval image, determine the location information of the retrieval target in the retrieval image, and then extract an image of the retrieval target from the retrieval image based on the location information of the retrieval target.

As another implementation, as the retrieval device has a target recognition function, in order to accurately and rapidly perform recognition on the retrieval image, the electronic device can send the retrieval image to the retrieval device. The retrieval device, after receiving the retrieval image, can perform target recognition on the retrieval image and then determine location information of each retrieval target in the retrieval image.

Wherein, the specific means of target recognition can be any means of target recognition in the field of image processing, so long as location information of the retrieval target in the retrieval image can be recognized, and is not specifically limited here.

The retrieval device, after recognizing and obtaining the location information of each retrieval target, can send the location information of each retrieval target to the electronic device. The electronic device can thus obtain the location information of each retrieval target and then extract an image of the retrieval target in the retrieval image based on the location information of the retrieval target. Of course, the retrieval device can also extract an image of a retrieval target from the retrieval image based on location information of the retrieval target and then send the extracted image of the retrieval target to the electronic device, which is also appropriate.

It can be seen that in the embodiment, the electronic device can determine location position of the retrieval target in the retrieval image and then extract an image of the retrieval target from the retrieval image based on the location information of the retrieval target. Thus, it can be ensured that the image of the retrieval target in the image list is consistent with the image of the retrieval target in the retrieval image, and a user can intuitively view the retrieval target exactly the same as the retrieval target in the retrieval image, which further increases ease of selecting a retrieval target by a user and improves user experience.

As an implementation of an embodiment of the present application, after obtaining the retrieval image, the above-described method can further include:
determining location information of each retrieval target in the retrieval image; for each retrieval target, establishing a correspondence between location information of the retrieval target and an image of the retrieval target in the image list.

As the specific means of determining location information of each retrieval target in the retrieval image has been presented in the above-described embodiment, it is not described again here. After location information of each retrieval target in the retrieval image is determined, in order to facilitate displaying, in an emphasized manner in the retrieval image, the retrieval target corresponding to the image selected by the user, for each retrieval target, a correspondence between the location information of the retrieval target and the image of the retrieval target in the image list can be established.

Correspondingly, displaying, in an emphasized manner in the retrieval image, the retrieval target corresponding to the selected image can include:
determining location information of the retrieval target corresponding to the selected image in the retrieval image as target location information based on the correspondence; displaying, in an emphasized manner in the retrieval image, the retrieval target corresponding to the selected image based on the target location information.

In the case where a user selects an image of any retrieval target in the above-described image list, the electronic device can determine location information of the retrieval target corresponding to the selected image in the retrieval image based on the above correspondence, and use the location information as target location information. After determining the target location information, the electronic device can display, in an emphasized manner in the retrieval image, the retrieval target corresponding to the selected image, based on the target location information.

For example, the above-described image list includes in total images of three retrieval targets. A user selects an image of the first retrieval target in the image list. The electronic device can then determine, based on the above correspondence, the location information of a retrieval target contained in the image of the first retrieval target in the retrieval image. Assuming the location information is the coordinates of four vertices of a recognition box, the electronic device can then use the coordinates of the four vertices as target location information. Then, a recognition box represented by the coordinates of the four vertices is displayed in an emphasized manner in the retrieval image so as to achieve an effect of displaying the retrieval target in an emphasized manner,.

It can be seen that in the embodiment, the electronic device can determine location information of each retrieval target in the retrieval image, for each retrieval target, establish a correspondence between the location information of the retrieval target and an image of the retrieval target in the image list, then determine location information of the retrieval target corresponding to the selected image in the retrieval image as target location information, and display, in an emphasized manner in the retrieval image, the retrieval target corresponding to the selected image based on the target location information. Thus, the electronic device can accurately and rapidly determine location information of the retrieval target corresponding to the selected image in the retrieval image based on the above-described correspondence, and then display, in an emphasized manner in the retrieval image, the retrieval target corresponding to the selected image.

As an implementation of an embodiment of the implementation, after determining the location information of each retrieval target in the retrieval image, the above-described method can further include:
displaying an identifier of each retrieval target in the retrieval image based on the location information.

In order to further facilitate the viewing and selecting of an image of a retrieval target to be retrieved by a user, the electronic device can display an identifier of each retrieval target in the retrieval image based on location information of each retrieval target in the retrieval image. At the same time, the identifier of the image of each retrieval target can also be displayed in the image list. The identifier of a retrieval target in the retrieval image corresponds to the identifier of the image of this retrieval target in the image list. Wherein, an identifier of a retrieval target can be one of numbers, letters, icons, symbols, etc., which are all appropriate.

In order to present each retrieval target in an associated way in the image list and facilitate viewing and selecting by a user, the electronic device can also display the identifier of each retrieval target in the image list. In an implementation, the identifier of each retrieval target displayed in the image list can be identical to the identifier of each retrieval target displayed in the retrieval image. For example, if the identifier of a retrieval target m displayed in the retrieval image is 11, then the identifier of the retrieval target m displayed in the image list can also be tl.

Of course, the identifier of each retrieval target displayed in the image list can be different from the identifier of each retrieval target displayed in the retrieval image, which is also appropriate, so long as it can be reflected that the two correspond to each other. For example, if the identifier of a retrieval target m displayed in the retrieval image is 10, then the identifier of the retrieval target m displayed in the image list can be 10a.

It can be seen that in the embodiment, after determining location information of each retrieval target in the retrieval image, the electronic device can display the identifier of each retrieval target in the retrieval image based on the location information. The identifier of an image of each retrieval target is displayed in the image list. The identifier of a retrieval target in the retrieval image corresponds to the identifier of the image of the retrieval target in the image list, which can further facilitate the viewing and selecting of a retrieval target by a user and further improves user experience.

As an implementation of an embodiment of the present application, in case that an image of any retrieval target is selected in the above-described image list, the above-described method can further include:
displaying, in an emphasized manner in the retrieval image, an identifier of the retrieval target corresponding to the selected image; displaying, in an emphasized manner in the image list, an identifier of an image of the retrieval target corresponding to the selected image.

In the case where the identifier of a retrieval target and the identifier of an image of the retrieval target are respectively displayed in the retrieval image and the image list, after a user selects an image of any retrieval target in the above-described image list, the electronic device can display, in an emphasized manner in the retrieval image, an identifier of the retrieval target corresponding to the selected image, and at the same time can also display, in an emphasized manner in the image list, the identifier of an image of the retrieval target corresponding to the selected image, so as to facilitate the determination by a user whether the retrieval target selected by the user is correct.

For example, images of a retrieval target m1, a retrieval target m2, and a retrieval target m3 are displayed in the image list. Identifiers of the images of these three retrieval targets are respectively S 1, S2, and S3. Identifiers of these three retrieval targets in the retrieval images are also respectively S 1, S2, and S3. If a user selects an image of the retrieval target m2 in the image list, then the identifier S2 can be displayed in an emphasized manner in the image list. At the same time, the identifier S2 is displayed in an emphasized manner in the retrieval image.

As an implementation, the electronic device can also display, in an emphasized manner in the retrieval image, the selection box and/or identifier of the retrieval target corresponding to the selected image. In order to more clearly present the retrieval target to be retrieved selected by a user so that the user can determine whether the selection is incorrect, the electronic device can also display, in an emphasized manner in the retrieval image, the selection box and/or identifier of the retrieval target corresponding to the selected image.

Of course, the selection box and/or identifier of the image of the retrieval target selected by the user can also be displayed in an emphasized manner in the image list. In this embodiment, the means of displaying in an emphasized manner can be means such as box selecting an image of the retrieval target and is not specifically limited here.

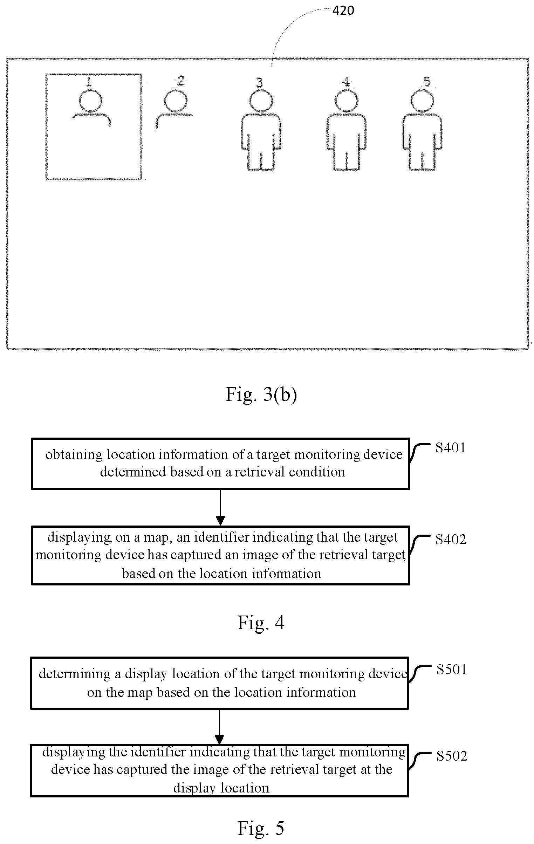

For example, the retrieval image 410 as shown in Fig. 3(a) contains five retrieval targets. The identifiers of the retrieval targets are respectively 1, 2, 3, 4, and 5. The image list 420 corresponding to the retrieval image 410 as shown in Fig. 3(b) contains images of the five retrieval targets and corresponding identifiers, which are respectively the same as the identifiers of the five retrieval targets in the retrieval image 410 and are also 1, 2, 3, 4, and 5.

When a user clicks an image of the retrieval target with the identifier 1 in the image list 420, the electronic device obtains a retrieval instruction, and can box select the retrieval target with the identifier 1 respectively in the retrieval image 410 and the image list 420 so as to achieve the objective of displaying in an emphasized manner. Of course, the identifier 1 can also be displayed in an emphasized manner in the retrieval image 410 and the image list 420.

It can be seen that in the embodiment, in case that an image of any retrieval target is selected in the image list, the electronic device can display, in an emphasized manner in the retrieval image, the identifier and/or selection box of the selected retrieval target. It can also display, in an emphasized manner in the image list, the identifier and/or selection box of the selected image of the retrieval target. Thus, the electronic device can more clearly present an image of a retrieval target, and a user can more easily and accurately select an image of a target to be retrieved, which is not likely to result in misoperations and can further improve ease of user operations.

As an implementation of an embodiment of the present application, after determining the location information of each retrieval target in the retrieval image, the above-described method can further include:
displaying, in the retrieval image, an identifier indicating that a retrieval target is not selected based on the location information.

In order to more clearly inform a user of which retrieval target(s) are not selected, the electronic device, after determining the location information of each retrieval target in the retrieval image, can display, in the retrieval image, an identifier indicating that a retrieval target is not selected based on the location information.

Wherein, an identifier indicating that a retrieval target is not selected can be a preset color such as red, green, blue, etc. It can also be a preset character such as a number, a letter, a word, etc. It can also be a preset icon such as a cross icon, a hollow circle icon, etc. It is not specifically limited here.

Correspondingly, after displaying the image list, the above-described method can further include:
displaying, in the image list for an image of a retrieval target, an identifier indicating that the image of the retrieval target is not selected.

Similarly, in order to more clearly inform a user of which retrieval target(s) are not selected, the electronic device can also display, in the image list for an image of a retrieval target, an identifier indicating that the image of the retrieval target is not selected. The identifier indicating that an image of a retrieval target is not selected displayed in the image list can be identical to or different from the identifier indicating that the image of the retrieval target is not selected displayed in the retrieval image.

In this case, the above-described step of, in case that the image of any retrieval target is selected in the image list, displaying, in an emphasized manner in the retrieval image, the retrieval target corresponding to the selected image can include:
in case that the image of any retrieval target is selected in the image list, replacing an identifier indicating that the retrieval target corresponding to the selected image is not selected with an identifier indicating that the retrieval target is selected, in the retrieval image, and replacing an identifier indicating that the selected image is not selected with an identifier indicating that the selected image is selected, in the image list.

In order to more clearly inform a user of which retrieval target(s) are selected, in case that an image of any retrieval target is selected in the image list, the electronic device can replace an identifier indicating that the retrieval target corresponding to the selected image is not selected with an identifier indicating that the retrieval target is selected, in the retrieval image, and replace an identifier indicating that the selected image is not selected with an identifier indicating that the selected image is selected, in the image list.

For example, the retrieval image contains five retrieval targets. Displayed identifiers indicating that the retrieval targets are not selected are respectively A1, A2, A3, A4, and A5. Images of the five retrieval targets and identifiers indicating that they are not selected, which are respectively A1, A2, A3, A4, and A5, are displayed in the image list. When a user clicks an image of the retrieval target with the identifier A3 in the image list, the electronic device can respectively replace the identifier A3 in the retrieval image and the image list with an identifier B3 indicating the selection thereof so as to inform the user that the retrieval target corresponding to the identifier B3 is selected.

It should be noted that, in the case where an image of any retrieval target in the image list changes from a selected state to a non-selected state, an identifier indicating that the retrieval target corresponding to the selected image is selected can be replaced in the retrieval image with an identifier indicating that the retrieval target is not selected, and an identifier indicating that the selected image is selected can be replaced in the image list with an identifier indicating that the selected image is not selected.

In an embodiment, displaying, in the retrieval image, an identifier indicating that a retrieval target is not selected based on the location information can be adding a selection box of a first color to the retrieval target in the retrieval image; displaying, for an image of the retrieval target in the image list, an identifier indicating that the image of the retrieval target is not selected can be adding a second selection box of a second color to the image of the retrieval target in the image list. Here, the first color and the second color can be identical, for example, green. Or they can be different. For example, the first color is light green and the second color is light blue. Thus, as the first color and the second color can be the same, it can facilitate determining a correspondence between a selection box in the retrieval image and a selection box in the image list. A user can determine which retrieval target in the image list is the retrieval target identical to the retrieval target that is not selected in the retrieval image based on selection boxes with the same color.
in case that an image of any retrieval target is selected in the image list, the first color of the selection box of the retrieval target currently selected in the retrieval image is replaced with a third color, and the second color of the selection box of the image of the retrieval target currently selected in the image list is replaced with a fourth color. The third color and the fourth color can be identical. For example, they can both be red. They can also be different. For example, the third color is red, and the fourth color is yellow.

It should be noted that, in the case where a certain target in the image list changes from a selected state to a non-selected state, the color of the selection box corresponding to the target in the retrieval image will be restored to the first color, and the color of the selection box corresponding to an image of the target in the image list will be restored to the second color.

As another example, the retrieval image contains three retrieval targets. An identifier indicating that a retrieval target is not selected displayed in the retrieval image is a green selection box displayed for each retrieval target. Images of the three retrieval targets and identifiers indicating that they are not selected are displayed in the image list. That is, a green selection box is displayed for an image of each retrieval target. When a user clicks an image of a first retrieval target in the image list, the electronic device can display respectively a green selection box corresponding to the first retrieval target in red in the retrieval image and the image list so as to inform the user that the retrieval target box selected in the red selection box is currently selected.

It can be seen that in the embodiment, the electronic device can display, in the retrieval image, an identifier indicating that a retrieval target is not selected and display, in the image list for an image of the retrieval target, an identifier indicating that the retrieval target is not selected, based on the location information. Thus, in case that an image of any retrieval target is selected in the image list, the identifier indicating that the retrieval target corresponding to the selected image is not selected is replaced in the retrieval image with an identifier indicating that the retrieval target is selected, and the identifier indicating that the selected image is not selected is replaced in the image list with an identifier indicating that the selected image is selected, which can further facilitate a user to check whether the retrieval target selected by the user is correct and can improve user experience.

As human eyes are relatively sensitive to the brightness of a color, as an implementation of an embodiment of the present application, the means of the above-described displaying in an emphasized manner can be highlighting. Thus, the selection box and/or identifier of a selected retrieval target can be displayed in an emphasized manner simply and rapidly, and a very good effect of displaying in an emphasized manner can be achieved, drawing sufficient attention from a user.

As an implementation of an embodiment of the present application, after obtaining the retrieval image, the above-described method can further include:
displaying a retrieval time input box and/or a monitoring device identifier list.

For a monitoring image, there is a capturing time and a corresponding monitoring device for capturing the monitoring image. Thus, when a user performs information retrieval, retrieval can also be performed based on the capturing time and the monitoring device for capturing the monitoring image. Therefore, the electronic device can also display a retrieval time input box and/or a monitoring device identifier list for a user to select a retrieval time and/or monitoring device to be retrieved.

Wherein, a user can input a time period or time point to be retrieved in the retrieval time input box. There may be one or a plurality of time periods or time points. A user can also select the identifier of a monitoring device to be retrieved in the monitoring device identifier list, and can select the identifier of one monitoring device, or identifiers of a plurality of monitoring devices.

For example, a user can input 10 o'clock on June 22, 2020 to 12 o'clock on June 22, 2020 in the retrieval time input box, and can also input the identifier of a monitoring device to be retrieved in the monitoring device identifier list, which, for example, can be P1, P3, P4, and P7. Thus, what the user wants to retrieve are monitoring images captured by the monitoring devices with the identifiers P 1, P3, P4, and P7 within the period from 10 o'clock on June 22, 2020 to 12 o'clock on June 22, 2020 which match an image of a retrieval target.

It can be seen that in the embodiment, after obtaining the retrieval image, the electronic device can further display a retrieval time input box and/or a monitoring device identifier list. Thus, retrieval can be performed for retrieval time and/or a monitoring device identifier and an image of a retrieval target, which can facilitate more comprehensive information retrieval by a user based on time and a monitoring device identifier and further improve ease of user operations and improve user experience.

Corresponding to the above-mentioned first information retrieval method, an embodiment of the present application also provides a second information retrieval method. The second information retrieval method provided in the embodiment of the present application will be introduced below.

The second information retrieval method according to the embodiment of the present application can be applied to any electronic device that needs to perform information retrieval, for example, it can be a mobile phone, a computer, a monitoring terminal, and the like, and is not specifically limited here. For clarity of description, it is subsequently referred to as an electronic device. The electronic device and the electronic device executing the first information retrieval method above may be the same device or different devices, which are not specifically limited here.

As shown in Fig. 4, an information retrieval method includes:
S401, obtaining location information of a target monitoring device determined based on a retrieval condition;
wherein, the retrieval condition includes an image of a retrieval target and candidate monitoring devices, the target monitoring device is a monitoring device that has captured images among which there is a captured image matching the image of the retrieval target, among the candidate monitoring devices included in the retrieval condition;
S402, displaying, on a map, an identifier indicating that the target monitoring device has captured an image of the retrieval target, based on the location information.

It can be seen that in the technical solution according to the embodiment of the present application, the electronic device can obtain location information of a target monitoring device determined based on a retrieval condition, wherein the retrieval condition includes an image of a retrieval target and candidate monitoring devices, and the target monitoring device is a monitoring device that has captured images among which there is a captured image matching the image of the retrieval target, among the candidate monitoring devices included in the retrieval condition; display, on a map, an identifier indicating that the target monitoring device has captured an image of the retrieval target, based on the location information. The electronic device can display, on a map, an identifier indicating that the target monitoring device has captured an image of the retrieval target, based on the location information of the target monitoring device, so that the user can conveniently view the retrieval results, and the electronic device can enable the user to know the position of the target monitoring device in space, which in turn know the location where the retrieval target once appeared, which can improve user experience.

After information retrieval is performed with respect to the retrieval condition, the electronic device can obtain the location information of the target monitoring device determined based on the retrieval condition, wherein, the retrieval condition includes an image of a retrieval target and candidate monitoring devices, the target monitoring device is a monitoring device that has captured images among which there is a captured image matching the image of the retrieval target, among the candidate monitoring devices included in the retrieval condition. Wherein, the image of the retrieval target can be the image of the retrieval target in the above-mentioned first information retrieval method. That is to say, after the above-mentioned first information retrieval method is used for retrieval, the second information retrieval method according to the embodiment of the present application can be used to display an identifier indicating that the target monitoring device has captured an image of the retrieval target.

In an implementation, the location information of the target monitoring device may be sent by the retrieval device to the electronic device. Specifically, the retrieval device may send a retrieval result to the electronic device after performing the retrieval and obtaining the retrieval result, so that the electronic device may also receive the retrieval result sent by the retrieval device. The retrieval result may include the location information of the target monitoring device determined based on the retrieval condition.

When the retrieval device performs retrieval, it can search the pre-stored monitoring images for an image captured by the monitoring device identified as a candidate monitoring device and matching the image of the retrieval target. This image is the corresponding captured image of the target monitoring device determined based on the retrieval condition. In turn, the monitoring device that captured the image is the target monitoring device determined based on the retrieval condition, and then the location information of the found target monitoring device determined based on the retrieval condition is sent to the electronic device.

In another implementation, the electronic device may obtain the identifier of the target monitoring device determined based on the retrieval condition, and then determine the location information of the target monitoring device from the pre-stored location information of each monitoring device.

In order to facilitate the user to view the retrieval results, the electronic device may obtain a map in advance. After obtaining the retrieval condition, the electronic device may obtain the map where the target monitoring device corresponding to the retrieval condition is located. In an implementation, the electronic device may pre-store the correspondence between the identifier of each monitoring device and the map, so as to facilitate the determination of the map to be obtained.

As an implementation, the map may be pre-stored in a preset database of a server, and when the electronic device needs to obtain one or more maps, the corresponding map may be loaded from the server. Wherein, the map may be a map image, or a GIS (Geographic Information System) map, and the like, which are not specifically limited here.

After the electronic device obtains the above location information, it can execute the above step S402, that is, display, on a map, an identifier indicating that the target monitoring device has captured an image of the retrieval target based on the location information.

Since the installation location of each monitoring device is fixed, the location information of the target monitoring device is known. After the electronic device obtains the above location information, it can determine the location of the target monitoring device in the pre-obtained map, and then display, on the map, the identifier indicating that the target monitoring device has captured the image of the retrieval target.

In another implementation, the location of each monitoring device may be pre-marked on the map, and after the electronic device obtains the above location information, it may hide the locations that do not match the location information. That is, the locations of the monitoring devices other than the above-mentioned target monitoring device are not displayed on the map.

As an implementation of the embodiment of the present application, as shown in Fig. 5, displaying, on the map, the identifier indicating that the target monitoring device has captured the image of the retrieval target based on the location information may include: S501, determining a display location of the target monitoring device on the map based on the location information;

In order to display, on the map, the identifier indicating that the target monitoring device has captured the image of the retrieval target, the electronic device first needs to determine the display location of the target monitoring device on the map, and the electronic device can determine its display location on the map according to the location information of the target monitoring device, wherein the location information of the target monitoring device may be the location of the target monitoring device on the map or the geographic location of the target monitoring device.

In an implementation, the above display location may be its corresponding exact location on the map determined according to the location information of the target monitoring device, or a display location within a certain distance from the exact location, as long as it can represent the approximate location of the target monitoring device on the map.

If the location information of the target monitoring device is the location of the target monitoring device on the map, then the electronic device can determine the location information of the target monitoring device as the display location of the target monitoring device on the map.

In an implementation, the electronic device may also determine one of the locations within a certain distance from the location information of the target monitoring device as the display location of the target monitoring device on the map, which is also reasonable.

If the location information of the target monitoring device is the geographic location of the target monitoring device, for example, latitude and longitude coordinates, since the geographic location corresponding to each point on the map is determined, the electronic device can convert the geographic location of the target monitoring device to the display location of the target monitoring device on the map.

In an implementation, the electronic device may determine a location that is within a certain distance from the geographic location of the target monitoring device as a candidate location, and then convert the candidate location into a location on the map, one of these locations is determined as the display location of the target monitoring device on the map. The electronic device can also convert the geographic location of the target monitoring device into a location on the map, and in turn determine a location among locations within a certain extent from the above location as the display location of the target monitoring device on the map.

S502, displaying the identifier indicating that the target monitoring device has captured the image of the retrieval target at the display location.

After determining the display location of the target monitoring device on the map, the electronic device can display the identifier indicating that the target monitoring device has captured the image of the retrieval target at the determined display location.

Wherein, the identifier indicating that the target monitoring device has captured the image of the retrieval target may include at least one of the following: the location identifier of the target monitoring device, a specified image among the captured images captured by the target monitoring device matching the image of the retrieval target, and a display icon.

The location identifier of the target monitoring device is an identifier that can represent the location of the target monitoring device on the map. For example, camera 1, camera 2, camera 3, and the like may be used as the location identifier. It is reasonable that the specified image among the captured images captured by the target monitoring device matching the image of the retrieval target may be at least one random image or at least one preset image among the captured images. The display icon may be configured to indicate the total number of captured images captured by the target monitoring device matching the image of the retrieval target, and the display icon may be an operable icon on which the user may click or perform other operations.

It can be seen that in this embodiment, the electronic device can use at least one of the above three types of identifiers as an identifier indicating that the target monitoring device has captured the image of the retrieval target. No matter which identifier is used, the target monitoring device and the location where the retrieval target once appeared can be clearly identified on the map, which is convenient for users to view.

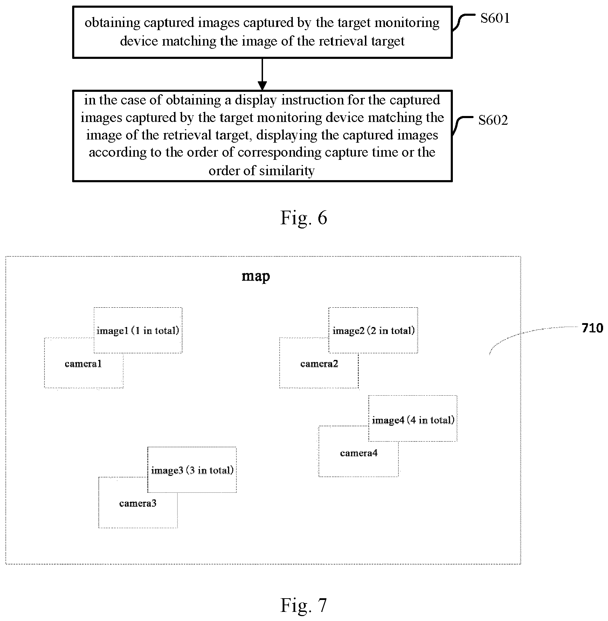

As an implementation of the embodiment of the present application, as shown in Fig. 6, the above method may further include: S601, obtaining captured images captured by the target monitoring device matching the image of the retrieval target;

In order to be able to display to the user the captured image captured by the target monitoring device matching the image of the retrieval target, the electronic device may also obtain the captured image captured by the target monitoring device matching the image of the retrieval target.

For one target monitoring device, there may be multiple corresponding captured images matching the image of the retrieval target. Multiple captured images that meet the retrieval condition might be retrieved. For example, a courier drives a courier car r to deliver couriers in a residential community, and he enters and exits from different apartment buildings. Then he would be monitored by multiple monitoring devices or a same monitoring device for multiple times. Therefore, there may exist multiple captured images containing the courier car r. When the retrieval target included in the retrieval condition is the courier car r, there will be multiple captured images captured by the target monitoring device matching the image of the retrieval target.

Since there are multiple captured images, if all the captured images are displayed, it will occupy a large area of the map, which may affect the display of the captured images corresponding to other target monitoring devices, and may cause confusion in the display effect. Therefore, in an implementation, the electronic device may display a specified image among multiple captured images and a display icon.

Wherein, the specified image among the multiple captured images may be a captured image randomly selected from the multiple captured images, or may be the earliest captured image sorted according to the capture time, which is not specifically limited here.

S602, in the case of obtaining a display instruction for the captured images captured by the target monitoring device matching the image of the retrieval target, displaying the captured images according to the order of corresponding capture time or the order of similarity.

In the case of obtaining the display instruction for the captured images captured by the target monitoring device matching the image of the retrieval target, the electronic device may sort the captured images according to the corresponding capture time or similarity, and display the captured images. Wherein, the display instruction is triggered based on the identifier indicating that the target monitoring device has captured the image of the retrieval target.

The identifier of the image of the retrieval target may include at least one of the following: the location identifier of the target monitoring device, a specified image among the captured images captured by the target monitoring device matching the image of the retrieval target, and a display icon, wherein any type of identifier can be deemed as an operable identifier to trigger the display instruction.

If the identifier indicating the target monitoring device has captured the image of the retrieval target is a specified image and a display icon, the electronic device may display the specified image and the non-specified image at the same time if the display instruction triggered based on the display icon is obtained.

For example, the location identifiers of the target monitoring device are: camera 1, camera 2, camera 3, camera 4, and the numbers of the captured images corresponding to the four target monitoring devices are 1, 2, 3, 4 respectively, then the electronic device can obtain in advance the map where the four target monitoring devices are located, and then determine the display locations of the four target monitoring devices on the map, and display the location identifiers of the target monitoring devices, the specified images among the multiple captured images and and display icons on the map.

On the map 710 shown in Fig. 7, the specified image for display corresponding to camera 1 is picture 1, and the display icon is "1 in total"; the specified image for display corresponding to camera 2 is picture 2, and the display icon is "2 in total"; the specified image for display corresponding to camera 3 is picture 3, and the display icon is "3 in total"; the specified image for display corresponding to camera 4 is picture 4, and the display icon is "4 in total". The user clicks on the display icons to view the corresponding specified image and non-specified image.

In an implementation, since the capture time of a captured image can represent the relationship between the time when and location where the retrieval target appears, in order to facilitate the user to know the relevant information, regarding the display sequence of the multiple captured images, these captured images can be sorted and displayed according to the capture time. Specifically, the order of capture time can be from earlier time to later time or from later time to earlier time, which is reasonable.

In another implementation, the above similarity is a similarity between each captured image and the image of the retrieval target included in the retrieval condition. The similarity between each captured image and the image of the retrieval target included in the retrieval condition can represent the possibility that the captured image is the image of the retrieval target. The higher the similarity, the higher the possibility that the captured image is the image of the retrieval target. On the contrary, the lower the similarity, the lower the possibility that the captured image is the image of the retrieval target. Therefore, regarding the display order of multiple captured images, these captured images can be sorted and displayed according to similarity, and the specific similarity order can be from high to low or from low to high, which is reasonable.

It can be seen that, in this embodiment, the electronic device can obtain captured images captured by the target monitoring device matching the image of the retrieval target, and in the case of obtaining a display instruction for the captured images captured by the target monitoring device matching the image of the retrieval target, display the captured images according to the order of corresponding capture time or the order of similarity, which can facilitate the user to view the captured images and obtain more relevant information, and thus further improves user experience.

As an implementation of the embodiment of the present application, there may be multiple target monitoring devices.

Displaying, on the map, the identifier indicating that the target monitoring device has captured the image of the retrieval target based on the location information may include:
obtaining multiple target map images corresponding to the multiple target monitoring devices; displaying identifiers indicating that the multiple target monitoring devices have captured images of the retrieval target in the multiple target map images based on the location information.

In an implementation, the electronic device may select a plurality of target map images corresponding to a plurality of target monitoring devices from the plurality of map images. Specifically, for residential areas, shopping malls, office buildings, stations, airports and other small-scale monitoring sites with unchanged layout, map images can be used. The installation locations of monitoring devices are fixed, and thus the correspondences between the device identifiers of monitoring devices and the map images are fixed.

For example, two monitoring devices are installed at the gate of a residential community, identified as D0 and D1, and a monitoring device is installed in the garden of the residential community, identified as D2. Then the device identifiers of the monitoring devices corresponding to the map image A1 of the gate of the residential community are D0 and D1, and the device identifier of the monitoring device corresponding to the map image A2 of the garden of the residential community is D2. If the device identifiers of the candidate monitoring devices included in the retrieval condition are D0, D 1 and D2, then the electronic device can obtain the map image A1 and the map image A2 as the target map images.

For another example, the device identifiers of the candidate monitoring devices included in the retrieval condition are C1, C3 and C6, and the pre-stored correspondences between the device identifiers and the maps is shown in the following table.

| Identifier of monitoring device | | Map |
|---|---|---|
| | C1, C2, C3 | map 1 |
| | C4, C6 | map 2 |
| | C5, C2 | map 3 |

Then the electronic device can pre-obtain map 1 and map 2 as the target map images, so as to display on the maps after obtaining the location information of the target monitoring devices that meet the retrieval condition.

In another implementation, the electronic device may extract multiple target map images corresponding to multiple target monitoring devices from the map image. Since the map image may be one that has a relatively large extent and includes a very large number of monitoring devices, and the number of target monitoring devices is generally not too many, so if the map image is directly used as the target map image, then the identifiers indicating that multiple monitoring devices have captured the images of the retrieval target are scattered when displayed in the map image, which is not conducive to users to view.

Therefore, the electronic device can extract multiple target map images corresponding to multiple target monitoring devices from the map image according to the location information of the multiple target monitoring devices, and the multiple target map images are map images that include multiple target monitoring devices and have a small map extent.

After the target map image is obtained, the electronic device can display, in the multiple target map images, identifiers indicating that multiple target monitoring devices have captured images of the retrieval target based on the location information. The specific display method is the same as the above-mentioned method of displaying, on the map, the identifier indicating that the target monitoring device has captured the image of the retrieval target, and will not be repeated here.

It can be seen that in this embodiment, when there are multiple target monitoring devices, the electronic device can obtain multiple target map images corresponding to the multiple target monitoring devices; and in turn, display identifiers indicating that the multiple target monitoring devices have captured images of the retrieval target in the multiple target map images based on the location information. In the case of multiple target monitoring devices, the target map images can be accurately obtained and the identifiers indicating that the multiple target monitoring devices have captured images of the retrieval target can be displayed in the target map images, which is convenient for users to view.

As an implementation of the embodiment of the present application, when there are multiple target map images, displaying identifiers indicating that the multiple target monitoring devices have captured images of the retrieval target in the multiple target map images, may include: for each specified map image of the multiple target map images, when the specified map image is displayed in a preset window, displaying the identifier of a corresponding target monitoring device indicating that the image of the retrieval target has been captured in the specified map image and displaying a thumbnail of a non-specified map image corresponding to the above specific map image among the target map images at a display location different from that of the preset window.

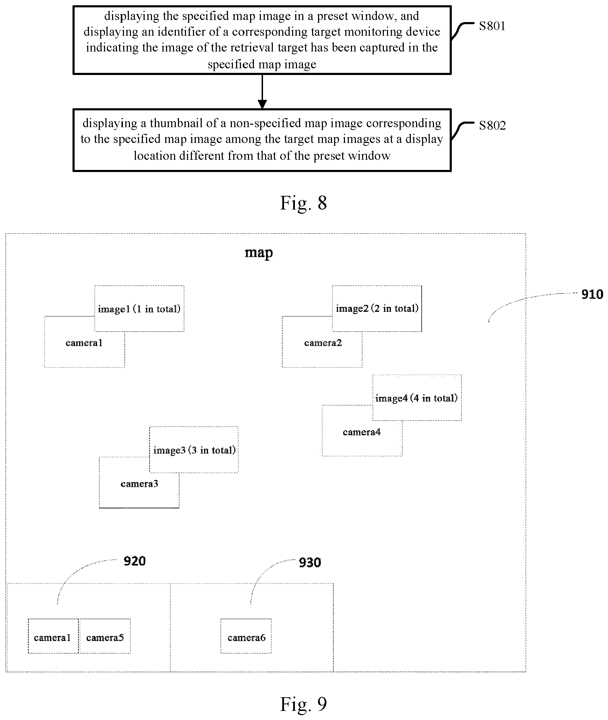

That is to say, for each specified map image of the multiple target map images, as shown in Fig. 8, displaying the specified map image and displaying the identifier indicating that a target monitoring device has captured the image of the retrieval target in the specified map image can include:
S801, displaying the specified map image in a preset window, and displaying an identifier of a corresponding target monitoring device indicating the image of the retrieval target has been captured in the specified map image;

In this case, in order to clearly show the identifier of each target monitoring device indicating the image of the retrieval target has been captured, the electronic device can display a specified map image among multiple target map images in a preset window, and display the identifier of the corresponding target monitoring device indicating that the image of the retrieval target has been captured in the specified map image.

Wherein, the specified map image may be a map image randomly selected from multiple target map images, or a map image selected according to a certain rule. For example, it may be the first map image among multiple target map images, and the like, which is not specifically limited here.

S802, displaying a thumbnail of a non-specified map image corresponding to the specified map image among the target map images at a display location different from that of the preset window.

While displaying the specified map image in the preset window, the thumbnail of the non-specified map image corresponding to the specified map image among the target map images may be displayed at a display position different from that of the preset window. The non-specified map image refers to a target map image other than the current specified map image among the multiple target map images. For example, there are three target map images in total, which are target map image A, target map image B, and target map image C, then when target map image A is the specified map image, target map image B and target map image C are the non-specified map images corresponding to the specified map image; when the target map image B is the specified map image, the target map image A and the target map image C are the non-specified map images corresponding to the specified map image.

Wherein, the display location can be one of the lower left, upper right, upper center of the interface, the lower left window, the upper right window, the upper center window in the preset window, and the like, as long as it is different from the preset window, which is not limited herein. In an implementation, the size of the preset window may be larger than the size of a display location different from the preset window, so that the specified map image can be clearly displayed in the preset window.

For example, as shown in Fig. 9, while the specified map image 910 is displayed in the preset window, the thumbnails of the non-specified map image 920 and the non-specified map image 930 can be displayed at display positions different from the preset window at the lower left portion of the interface.

In an embodiment, the thumbnail of the non-specified map image may display the identifier of the corresponding target monitoring device indicating that the image of the retrieval target has been captured, or the identifier of a target monitoring device that has captured the retrieval target image, so as to facilitate users to know to which target monitoring device(s) the non-specified map image corresponds. For example, as shown in Fig. 9, the identifiers of camera 1 and camera 5 of the corresponding target monitoring devices indicating that the images of the retrieval target have been captured can be displayed in the thumbnail 920 of the non-specified map image, and the identifier of camera 6 of the corresponding target monitoring device indicating the image of the retrieval target has been captured can be displayed in the thumbnail 930 of the non-specified map image.

It can be seen that in the embodiment, when there are multiple target map images, for each specified map image of the multiple target map images, the electronic device can display the specified map image in a preset window, and display the identifier of the corresponding target monitoring device indicating that the image of the retrieval target has been captured in the specified map image and display a thumbnail of a non-specified map image corresponding to the specific map image among the target map images at a display location different from that of the preset window at the same time. In this way, it can be ensured that the target map images are displayed clearly, which is convenient for users to view.

As an implementation of the embodiment of the present application, the above method may also include:
in the case of obtaining a display instruction issued for the thumbnail, displaying the non-specified map image corresponding to the display instruction in the preset window, and displaying the identifier of the corresponding target monitoring device indicating that the image of the retrieval target has been captured in the non-specified map image.

When the user wants to view a non-specified map image, the user can perform operations on the thumbnail corresponding to the non-specified map image by one of the methods such as clicking or long pressing to trigger the display instruction, and in turn the electronic device can display the non-specified map image corresponding to the display instruction in the preset display window, and display the identifier of the corresponding target monitoring device indicating that the image of the retrieval target has been captured in the non-specified map image for the user to view. At this time, the non-specified map image corresponding to the display instruction currently becomes a specified map image, and the original specified map image currently becomes a non-specified map image.

For example, taking the map shown in Fig. 9 as an example, when the user clicks on the thumbnail of the non-specified map image 920, the electronic device can display the non-specified map image 920 in the preset window. If the identifiers of the corresponding target monitoring devices indicating that the image of the retrieval target has been captured corresponding to the non-specified map image 920 are camera 1 and camera 5, then the electronic device can display the identifiers of camera 1 and camera 5 in the non-specified map image 920 in the preset window.

In an embodiment, after the non-specified map image corresponding to the display instruction is displayed in the preset window, the thumbnail of the map image originally displayed in the preset window can be displayed at the location where the thumbnail of the non-specified map image corresponding to the display instruction was. That is, the thumbnail of the non-specified map image corresponding to the display instruction can be replaced with the thumbnail of the map image originally displayed in the preset window. Of course, it is also reasonable to rearrange the layout of the thumbnails of the current non-specified map images. In this way, when the user wants to view the map images originally displayed in the preset window again, a display instruction can be issued for the thumbnail of the map image, which is convenient for users to operate.

It can be seen that, in the embodiment, when the electronic device obtains a display instruction for a thumbnail, it can display the non-specified map image corresponding to the display instruction in a preset window, and display the identifier of the corresponding target monitoring device indicating that the image of the retrieval target has been captured in the non-specified map image, which is convenient for the user to switch the map image to be viewed, and further improves the convenience of the user's operation.

As an implementation of the embodiment of the present application, in order to facilitate the user to view the travel-related information of the retrieval target, the above method may also include:
obtaining capture time of captured images captured by the target monitoring devices matching the image of the retrieval target; displaying the travel trajectory of the retrieval target on the map based on the location information of the target monitoring device and the capture time.

The electronic device can display identifiers indicating that the target monitoring devices have captured images of the retrieval target on the map, can also display the captured images captured by the target monitoring devices matching the image of the retrieval target, and can also display the travel trajectory of the retrieval target. As an implementation, the electronic device can obtain the capture time of the captured images captured by the target monitoring devices matching the image of the retrieval target, and can further determine the respective time when the retrieval target is captured within the capture ranges of the target monitoring devices according to the corresponding capture time of the target monitoring devices, and can further draw and display the travel trajectory of the retrieval target on the map based on the location information of the target monitoring devices.

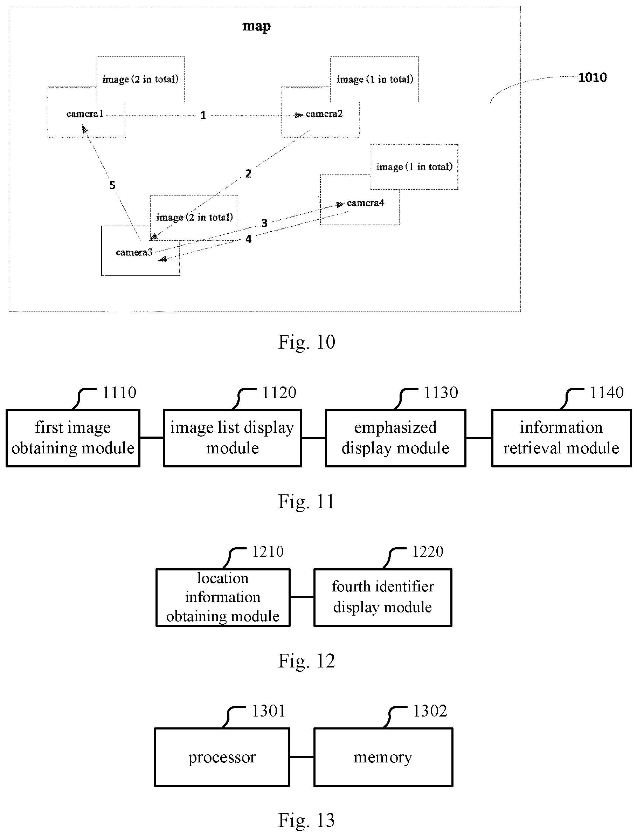

For example, in the map 1010 shown in Fig. 10, the corresponding display icon of camera 1 is "2 in total", wherein the capture time of a first picture is 9:05, and the capture time of a second picture is 9:47; the corresponding display icon of camera 2 is "1 in total", and the capture time of the picture is 9:09; the corresponding display icon of camera 3 is "2 in total", the capture time of a first picture is 9:16, and the capture time of a second picture is 9:33; the corresponding display icon of the camera 4 is "1 in total", and the capture time of the picture is 9:27. Then, the electronic device can determine the travel trajectory of the retrieval target according to the above capture time as: camera 1 - camera 2 - camera 3 - camera 4 - camera 3 - camera 1, and then display the travel trajectory on the map.

In an embodiment, the electronic device may mark the travel direction of the retrieval target with graphics such as arrows on the travel trajectory, and may also mark the order of each trajectory in the travel trajectory according to the capture time, so as to facilitate viewing. For example, in Fig. 10, arrows are used to mark the direction of travel of the retrieval target, and numbers 1-5 are used to mark the sequence of each trajectory. Of course, the travel trajectory can also be displayed in the form of animation. For example, each trajectory can be displayed in sequence according to the sequence of each trajectory, so that the user can know the travel process of the retrieval target.

It can be seen that in the embodiment, the electronic device can also obtain the capture time of the captured images captured by the target monitoring devices matching the image of the retrieval target, and display the travel trajectory of the retrieval target on the map based on the location information the target monitoring devices and the capture time, which further facilitates the user to view information related to the travel of the retrieval target, improves the convenience of information retrieval, and further improves user experience.

Corresponding to the above-mentioned first information retrieval method, an embodiment of the present application provides an information retrieval apparatus. The first information retrieval apparatus according to the embodiment of the present application is introduced below.

As shown in Fig. 11, an information retrieval apparatus includes:
a first image obtaining module 1110, configured for obtaining a retrieval image,
wherein the retrieval image includes at least one retrieval target;
an image list display module 1120, configured for obtaining an image of the at least one retrieval target, and displaying an image list,
wherein the image list includes the image of the at least one retrieval target;
an emphasized display module 1130, configured for, in case that an image of any retrieval target of the at least one retrieval target is selected in the image list, displaying, in an emphasized manner in the retrieval image, the retrieval target corresponding to the selected image;
an information retrieval module 1140, configured for obtaining a retrieval instruction for the selected image of the retrieval target, and performing retrieval based on the selected image of the retrieval target.

It can be seen that in the technical solution according to the embodiment of the present application, electronic device can obtain a retrieval image, wherein, the retrieval image includes at least one retrieval target; obtain an image of the retrieval target, and displaying an image list, wherein, the image list includes the image of the at least one retrieval target; in case that an image of any retrieval target of the at least one retrieval target is selected in the image list, display, in an emphasized manner in the retrieval image, the retrieval target corresponding to the selected image; obtain a retrieval instruction for the selected image of the retrieval target, and perform retrieval based on the selected image of the retrieval target. The electronic device can display the image list, and display, in an emphasized manner, the retrieval target corresponding to the selected image in case that an image of any retrieval target of the at least one retrieval target is selected in the image list, so that a user can easily and accurately select an image of a target to be retrieved in the image list. As images of retrieval targets do not overlap in the image list, it is not likely to result in misoperations, which can improve ease of user operations, facilitate information retrieval, and improve user experience.

As an implementation of the embodiment of the present application, the first image obtaining module 1110 can be configured to determine location information of the retrieval target in the retrieval image; extract an image of the retrieval target from the retrieval image based on the location information of the retrieval target.

As another implementation of the embodiment of the present application, the apparatus can further include:
a location information obtaining module, configured for determining location information of each retrieval target in the retrieval image after obtaining the retrieval target;
a correspondence establishing module, configured for, for each retrieval target, establishing a correspondence between location information of the retrieval target and an image of the retrieval target in the image list;
the emphasized display module 1130 can be configured for determining location information of the retrieval target corresponding to the selected image in the retrieval image as target location information based on the correspondence; displaying, in an emphasized manner in the retrieval image, the retrieval target corresponding to the selected image based on the target location information.

As an implementation of the embodiment of the present application, the apparatus can further include:
a first identifier display module, configured for, after determining the location information of each retrieval target in the retrieval image, displaying an identifier of each retrieval target in the retrieval image based on the location information;
wherein, an identifier of an image of each retrieval target is displayed in the image list, and an identifier of a retrieval target in the retrieval image corresponds to an identifier of an image of this retrieval target in the image list.

As an implementation of the embodiment of the present application, the apparatus can further include:
a second identifier display module, configured for, after determining the location information of each retrieval target in the retrieval image, displaying, in the retrieval image, an identifier indicating that a retrieval target is not selected based on the location information;
a third identifier display module configured for, after displaying the image list, displaying, in the image list for an image of the retrieval target, an identifier indicating that the image of the retrieval target is not selected;
the emphasized display module 1130 can be configured for, in case that the image of any retrieval target of the at least one retrieval target is selected in the image list, replacing an identifier indicating that the retrieval target corresponding to the selected image is not selected with an identifier indicating that the retrieval target is selected, in the retrieval image, and replacing an identifier indicating that the selected image is not selected with an identifier indicating that the selected image is selected, in the image list.

As an implementation of the embodiment of the present application, the emphasized display module 1130 can be configured for displaying, in an emphasized manner in the retrieval image, a selection box and/or an identifier of the retrieval target corresponding to the selected image, and displaying, in an emphasized manner in the image list, a selection box and/or an identifier of the image of the retrieval target corresponding to the selected image.

As an implementation of the embodiment of the present application, the image of the retrieval target is an image including the retrieval target extracted from the retrieval image, there is a one-to-one correspondence between the image of the retrieval target and the retrieval target.

Corresponding to the second information retrieval method, an embodiment of the present application provides another information retrieval apparatus. The second information retrieval apparatus according to an embodiment of the present application is introduced below.

As shown in Fig. 12, an information retrieval apparatus includes:
a location information obtaining module 1210, configured for obtaining location information of a target monitoring device determined based on a retrieval condition,
wherein the retrieval condition includes an image of a retrieval target and candidate monitoring devices, the target monitoring device is a monitoring device that has captured images among which there is a captured image matching the image of the retrieval target, among the candidate monitoring devices included in the retrieval condition;
a fourth identifier display module 1220, configured for displaying, on a map, an identifier indicating that the target monitoring device has captured an image of the retrieval target based on the location information.

It can be seen that in the technical solution according to the embodiment of the present application, the electronic device can obtain location information of a target monitoring device determined based on a retrieval condition, the retrieval condition including: an image of a retrieval target image and candidate monitoring devices, the target monitoring device being: the monitoring device that has captured images among which there is a captured image matching the image of the retrieval target, among the candidate monitoring devices included in the retrieval condition; display, on a map, an identifier indicating that the target monitoring device has captured an image of the retrieval target based on the location information. The electronic device can display, on a map, an identifier indicating that the target monitoring device has captured an image of the retrieval target based on the location information of the target monitoring device, so that the user can conveniently view the retrieval results, and can know the positional relationship of the target monitoring device in space, and thus know the location where the retrieval target once appeared, which can improve user experience.

As an implementation of the embodiment of the present application, the fourth identifier display module 1220 can be configured for determining a display location of the target monitoring device on the map based on the location information, and displaying the identifier indicating that the target monitoring device has captured the image of the retrieval target at the display location.

Wherein, the location information is a location of the target monitoring device on the map or a geographic location of the target monitoring device. Wherein the identifier indicating that the target monitoring device has captured the image of the retrieval target includes at least one of the following: a location identifier of the target monitoring device, a specified image among captured images captured by the target monitoring device matching the image of the retrieval target, and a display icon, wherein the display icon is configured to indicate the total number of the captured images captured by the target monitoring device matching the image of the retrieval target.

As an implementation of the embodiment of the present application, the apparatus can further include:
a second image obtaining module, configured for obtaining captured images captured by the target monitoring device matching the image of the retrieval target;
an image display module, configured for, in the case of obtaining a display instruction for the captured images captured by the target monitoring device matching the image of the retrieval target, displaying the captured images according to an order of corresponding capture time or an order of similarity.

Wherein the similarity is a similarity between each captured image and the image of the retrieval target included in the retrieval condition, the display instruction is triggered based on the identifier indicating that the target monitoring device has captured the image of the retrieval target.

As an implementation of the embodiment of the present application, there may be multiple captured images;

the fourth identifier display module 1220 may be configured to display a display icon and a specified image among the captured images captured by the multiple target monitoring device matching the image of the retrieval target, wherein the display icon is configured to indicate the number of the captured images.

As an implementation of the embodiment of the present application, there may be multiple target monitoring devices;

the fourth identifier display module 1220 may be configured for obtaining multiple target map images corresponding to the multiple target monitoring devices; and displaying identifiers indicating that the multiple target monitoring devices have captured images of the retrieval target in the multiple target map images based on the location information.

As an implementation of the embodiment of the present application, the fourth identifier display module 1220 may be configured to select multiple target map images corresponding to the multiple target monitoring devices from multiple map images; or configured to extract multiple target map images corresponding to multiple target monitoring devices from the map image.

As an implementation of the embodiment of the present application, the fourth identifier display module 1220 may be configured for, for each specified map image of the multiple target map images, when the specified map image is displayed in a preset window, displaying an identifier of a corresponding target monitoring device indicating that the image of the retrieval target has been captured in the specified map image and displaying a thumbnail of a non-specified map image corresponding to the specific map image among the target map images at a display location different from that of the preset window.

As an implementation of the embodiment of the present application, the apparatus may further include:
a time obtaining module, configured for obtaining capture time of captured images captured by target monitoring devices matching the image of the retrieval target;
a trajectory display module, configured for displaying a travel trajectory of the retrieval target on the map based on the location information of the target monitoring devices and the capture time.

An embodiment of the present application also provides an electronic device. As shown in Fig. 13, the electronic device includes a processor 1301 and a memory 1302;
the memory 1302 is configured to store a computer program;
the processor 1301 is configured to implement the first information retrieval method described in any of the above-mentioned embodiments when executing the program stored in the memory 1302 .

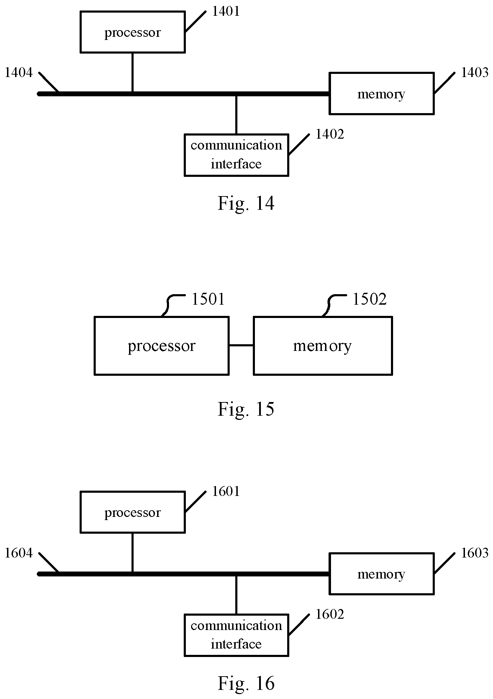

Optionally, as shown in Fig. 14, the embodiment of the present application also provides another electronic device, which may include a processor 1401, a communication interface 1402, a memory 1403, and a communication bus 1404, wherein the processor 1401, the communication interface 1402, the memory 1403 communicates with each other through the communication bus 1404,
the memory 1403 is configured to store a computer program;
the processor 1401 is configured to implement the first information retrieval method described in any of the above-mentioned embodiments when executing the program stored in the memory 1403.

It can be seen that in the technical solution according to the embodiment of the present application, the electronic device can obtain a retrieval image, wherein, the retrieval image includes at least one retrieval target; obtain an image of the retrieval target, and displaying an image list, wherein, the image list includes the image of the at least one retrieval target; in case that an image of any retrieval target of the at least one retrieval target is selected in the image list, display, in an emphasized manner in the retrieval image, the retrieval target corresponding to the selected image; obtain a retrieval instruction for the selected image of the retrieval target, and perform retrieval based on the selected image of the retrieval target. The electronic device can display the image list, and display, in an emphasized manner, the retrieval target corresponding to the selected image in case that an image of any retrieval target of the at least one retrieval target is selected in the image list, so that a user can easily and accurately select an image of a target to be retrieved in the image list. As images of retrieval targets do not overlap in the image list, it is not likely to result in misoperations, which can improve ease of user operations, facilitate information retrieval, and improve user experience.

An embodiment of the present application also provides another electronic device. As shown in Fig. 15, the electronic device includes a processor 1501 and a memory 1502;
the memory 1502 is configured to store a computer program;
the processor 1501 is configured to implement the second information retrieval method described in any of the above-mentioned embodiments when executing the program stored in the memory 1502 .

Optionally, as shown in Fig. 16, the embodiment of the present application also provides another electronic device, which may include a processor 1601, a communication interface 1602, a memory 1603, and a communication bus 1604, wherein the processor 1601, the communication interface 1602, the memory 1603 communicates with each other through the communication bus 1604,
the memory 1603 is configured to store a computer program;
the processor 1601 is configured to implement the second information retrieval method described in any of the above-mentioned embodiments when executing the program stored in the memory 1603.

It can be seen that in the technical solution according to the embodiment of the present application, the electronic device can obtain location information of a target monitoring device determined based on a retrieval condition, the retrieval condition including: an image of a retrieval target image and candidate monitoring devices, the target monitoring device being: the monitoring device that has captured images among which there is a captured image matching the image of the retrieval target, among the candidate monitoring devices included in the retrieval condition; display, on a map, an identifier indicating that the target monitoring device has captured an image of the retrieval target based on the location information. The electronic device can display, on a map, an identifier indicating that the target monitoring device has captured an image of the retrieval target based on the location information, so that the user can conveniently view the retrieval results, and can know the positional relationship of the target monitoring device in space and know the location where the retrieval target once appeared, which can improve user experience.

The communication bus mentioned in the above electronic device may be a Peripheral Component Interconnect (PCI) bus or an Extended Industry Standard Architecture (EISA) bus or the like. The communication bus can be divided into an address bus, a data bus, a control bus, and the like. For convenience of representation, only one thick line is used in the figures to represent the communication bus, but it does not mean that there is only one bus or one type of bus.

The communication interface is used for communication between the electronic device and other devices.

The memory may include a random access memory (RAM), and may also include a nonvolatile memory (NVM), such as at least one disk memory. Optionally, the memory may also be at least one storage device located far away from the aforementioned processor.

The above-mentioned processor can be a general-purpose processor, including a central processing unit (CPU), a network processor (NP), and the like; it can also be a digital signal processor (DSP), application specific integrated circuit (ASIC), Field-Programmable Gate Array (FPGA) or other programmable logic devices, discrete gate or transistor logic devices, discrete hardware components.

An embodiment of the present application also provides a computer-readable storage medium having stored therein a computer program which, when executed by a processor, causes the processor to implement the first information retrieval method described in any of the above-mentioned embodiments.

It can be seen that in the technical solution according to the embodiment of the present application, the electronic device can obtain a retrieval image, wherein, the retrieval image includes at least one retrieval target; obtain an image of the at least one retrieval target, and displaying an image list, wherein, the image list includes the image of the at least one retrieval target; in case that an image of any retrieval target of the at least one retrieval target is selected in the image list, display, in an emphasized manner in the retrieval image, the retrieval target corresponding to the selected image; obtain a retrieval instruction for the selected image of the retrieval target, and perform retrieval based on the selected image of the retrieval target. The electronic device can display the image list, and display, in an emphasized manner, the retrieval target corresponding to the selected image in case that an image of any retrieval target of the at least one retrieval target is selected in the image list, so that a user can easily and accurately select an image of a target to be retrieved in the image list. As images of retrieval targets do not overlap in the image list, it is not likely to result in misoperations, which can improve ease of user operations, facilitate information retrieval, and improve user experience.

An embodiment of the present application also provides another computer-readable storage medium having stored therein a computer program which, when executed by a processor, causes the processor to implement the second information retrieval method described in any of the above-mentioned embodiments.

It can be seen that in the technical solution according to the embodiment of the present application, the computer program, when executed by a processor, can cause the processor to obtain location information of a target monitoring device determined based on a retrieval condition, the retrieval condition including: an image of a retrieval target image and candidate monitoring devices, the target monitoring device being: the monitoring device that has captured images among which there is a captured image matching the image of the retrieval target, among the candidate monitoring devices included in the retrieval condition; display, on a map, an identifier indicating that the target monitoring device has captured an image of the retrieval target based on the location information. The electronic device can display, on a map, an identifier indicating that the target monitoring device has captured an image of the retrieval target based on the location information of the target monitoring device, so that a user can conveniently view the retrieval results, and can know the positional relationship of the target monitoring device in space and know the location where the retrieval target once appeared, which can improve user experience.

In yet another embodiment provided by the present application, a computer program product containing instructions is provided which, when executed by a computer, causes the computer to implement the first information retrieval method described in any of the above-mentioned embodiments.

It can be seen that in the technical solution according to the embodiment of the present application, the computer program, when executed by a processor, can cause the processor to obtain a retrieval image, wherein, the retrieval image includes at least one retrieval target; obtain an image of the at least one retrieval target, and displaying an image list, wherein, the image list includes the image of the at least one retrieval target; in case that an image of any retrieval target of the at least one retrieval target is selected in the image list, display, in an emphasized manner in the retrieval image, the retrieval target corresponding to the selected image; obtain a retrieval instruction for the selected image of the retrieval target, and perform retrieval based on the selected image of the retrieval target. The electronic device can display the image list, and display, in an emphasized manner, the retrieval target corresponding to the selected image in case that an image of any retrieval target of the at least one retrieval target is selected in the image list, so that a user can easily and accurately select an image of a target to be retrieved in the image list. As images of retrieval targets do not overlap in the image list, it is not likely to result in misoperations, which can improve ease of user operations, facilitate information retrieval, and improve user experience.

In yet another embodiment provided by the present application, a computer program product containing instructions is further provided which, when executed by a computer, causes the computer to implement the second information retrieval method described in any of the above-mentioned embodiments.

It can be seen that in the technical solution according to the embodiment of the present application, the computer program, when executed by a processor, can cause the processor to obtain location information of a target monitoring device determined based on a retrieval condition, the retrieval condition including: an image of a retrieval target image and candidate monitoring devices, the target monitoring device being: the monitoring device that has captured images among which there is a captured image matching the image of the retrieval target, among the candidate monitoring devices included in the retrieval condition; display, on a map, an identifier indicating that the target monitoring device has captured an image of the retrieval target based on the location information. The electronic device can display, on a map, an identifier indicating that the target monitoring device has captured an image of the retrieval target based on the location information of the target monitoring device, so that a user can conveniently view the retrieval results, and can know the positional relationship of the target monitoring device in space and know the location where the retrieval target once appeared, which can improve user experience.

It should be noted that, for the above-mentioned apparatus, electronic device, computer-readable storage medium, and computer program product embodiments, since they are basically similar to the method embodiments, the description is relatively simple. For related information, reference can be made to the part of the method embodiments.

It should be further noted that in this specification, relational terms such as first and second and the like are only used to distinguish one entity or operation from another entity or operation, and do not necessarily require or imply that any such actual relationship or order exists between these entities or operations. Furthermore, the term "comprise", "include" or any other variation thereof is intended to cover a non-exclusive inclusion such that a process, method, article, or device including a set of elements includes not only those elements, but also includes other elements not expressly listed, or also includes elements inherent in such a process, method, article, or device. Without further limitations, an element defined by the phrase "comprises a ..." does not exclude the presence of additional identical elements in the process, method, article or device including said element.

Each embodiment in this specification is described in a related manner, and the same and similar parts in each embodiment can be referred to each other, and each embodiment focuses on the differences from other embodiments.

The above descriptions are only preferred embodiments of the present application, and are not intended to limit the protection scope of the present application. Any modifications, equivalent replacements, improvements, and the like made within the spirit and principles of the present application fall within the protection scope of the present application.

## Claims

1. An information retrieval method, comprising:
obtaining a retrieval image, wherein the retrieval image comprises at least one retrieval target;
obtaining an image of the at least one retrieval target, and displaying an image list, wherein the image list comprises the image of the at least one retrieval target;
in case that an image of any retrieval target of the at least one retrieval target is selected in the image list, displaying, in an emphasized manner in the retrieval image, the retrieval target corresponding to the selected image;
obtaining a retrieval instruction for the selected image of the retrieval target, and performing retrieval based on the selected image of the retrieval target.

2. The method according to claim 1, wherein, after obtaining the retrieval image, the method further comprises:
determining location information of each retrieval target in the retrieval image;
for each retrieval target, establishing a correspondence between location information of the retrieval target and an image of the retrieval target in the image list;
displaying, in an emphasized manner in the retrieval image, the retrieval target corresponding to the selected image comprises:
determining location information of the retrieval target corresponding to the selected image in the retrieval image as target location information based on the correspondence;
displaying, in an emphasized manner in the retrieval image, the retrieval target corresponding to the selected image based on the target location information.

3. The method according to claim 2, wherein, after determining the location information of each retrieval target in the retrieval image, the method further comprises:
displaying an identifier of each retrieval target in the retrieval image based on the location information;
wherein, an identifier of an image of each retrieval target is displayed in the image list, and an identifier of a retrieval target in the retrieval image corresponds to an identifier of an image of this retrieval target in the image list.

4. The method according to claim 2, wherein, after determining the location information of each retrieval target in the retrieval image, the method further comprises:
displaying, in the retrieval image, an identifier indicating that a retrieval target is not selected based on the location information;
after displaying the image list, the method further comprises:
displaying, in the image list for an image of the retrieval target, an identifier indicating that the image of the retrieval target is not selected;
in case that the image of any retrieval target of the at least one retrieval target is selected in the image list, displaying, in an emphasized manner in the retrieval image, the retrieval target corresponding to the selected image comprises:
in case that the image of any retrieval target of the at least one retrieval target is selected in the image list, replacing an identifier indicating that the retrieval target corresponding to the selected image is not selected with an identifier indicating that the retrieval target is selected, in the retrieval image, and replacing an identifier indicating that the selected image is not selected with an identifier indicating that the selected image is selected, in the image list.

5. The method according to claim 1, wherein, displaying, in an emphasized manner in the retrieval image, the retrieval target corresponding to the selected image comprises:
displaying, in an emphasized manner in the retrieval image, a selection box and/or an identifier of the retrieval target corresponding to the selected image, and displaying, in an emphasized manner in the image list, a selection box and/or an identifier of the image of the retrieval target corresponding to the selected image.

6. The method according to any of claims 1 to 5, wherein, the image of the retrieval target is an image comprising the retrieval target extracted from the retrieval image, and there is a one-to-one correspondence between the image of the retrieval target and the retrieval target.

7. An information retrieval method, comprising:
obtaining location information of a target monitoring device determined based on a retrieval condition, wherein the retrieval condition comprises an image of a retrieval target and candidate monitoring devices, the target monitoring device is a monitoring device that has captured images among which there is a captured image matching the image of the retrieval target, among the candidate monitoring devices comprised in the retrieval condition;
displaying, on a map, an identifier indicating that the target monitoring device has captured an image of the retrieval target based on the location information.

8. The method according to claim 7, wherein, displaying, on the map, the identifier indicating that the target monitoring device has captured the image of the retrieval target based on the location information, comprises:
determining a display location of the target monitoring device on the map based on the location information, wherein the location information is a location of the target monitoring device on the map or a geographic location of the target monitoring device;
displaying the identifier indicating that the target monitoring device has captured the image of the retrieval target at the display location; wherein, the identifier indicating that the target monitoring device has captured the image of the retrieval target comprises at least one of the following: a location identifier of the target monitoring device, a specified image among captured images captured by the target monitoring device matching the image of the retrieval target, and a display icon, wherein the display icon is configured to indicate the total number of the captured images captured by the target monitoring device matching the image of the retrieval target.

9. The method according to claim 7, wherein, the method further comprises:
obtaining captured images captured by the target monitoring device matching the image of the retrieval target;
in the case of obtaining a display instruction for the captured images captured by the target monitoring device matching the image of the retrieval target, displaying the captured images according to an order of corresponding capture time or an order of similarity, wherein the similarity is a similarity between each captured image and the image of the retrieval target comprised in the retrieval condition, the display instruction is triggered based on the identifier indicating that the target monitoring device has captured the image of the retrieval target.

10. The method according to claim 7, wherein, there are multiple target monitoring devices; displaying, on the map, the identifier indicating that the target monitoring device has captured the image of the retrieval target based on the location information comprises:
obtaining multiple target map images corresponding to the multiple target monitoring devices;
displaying identifiers indicating that the multiple target monitoring devices have captured images of the retrieval target in the multiple target map images based on the location information.

11. The method according to claim 10, wherein, displaying identifiers indicating that the multiple target monitoring devices have captured the images of the retrieval target in the multiple target map images comprises:
for each specified map image of the multiple target map images, when the specified map image is displayed in a preset window, displaying an identifier of a corresponding target monitoring device indicating that the image of the retrieval target has been captured in the specified map image and displaying a thumbnail of a non-specified map image corresponding to the specific map image among the target map images at a display location different from that of the preset window.

12. The method according to any of claims 7 to 11, wherein, the method further comprises:
obtaining capture time of captured images captured by target monitoring devices matching the image of the retrieval target;
displaying a travel trajectory of the retrieval target on the map based on the location information of the target monitoring devices and the capture time.

13. An information retrieval apparatus, comprising:
a first image obtaining module, configured for obtaining a retrieval image, wherein the retrieval image comprises at least one retrieval target;
an image list display module, configured for obtaining an image of the at least one retrieval target, and displaying an image list, wherein the image list comprises the image of the at least one retrieval target;
an emphasized display module, configured for, in case that an image of any retrieval target of the at least one retrieval target is selected in the image list, displaying, in an emphasized manner in the retrieval image, the retrieval target corresponding to the selected image;
an information retrieval module, configured for obtaining a retrieval instruction for the selected image of the retrieval target, and performing retrieval based on the selected image of the retrieval target.

14. The apparatus according to claim 13, further comprising:
a location information obtaining module, configured for determining location information of each retrieval target in the retrieval image after obtaining the retrieval target;
a correspondence establishing module, configured for, for each retrieval target, establishing a correspondence between location information of the retrieval target and an image of the retrieval target in the image list;
the emphasized display module is configured for determining location information of the retrieval target corresponding to the selected image in the retrieval image as target location information based on the correspondence; displaying, in an emphasized manner in the retrieval image, the retrieval target corresponding to the selected image based on the target location information;
the apparatus further comprises:
a first identifier display module configured for, after determining the location information of each retrieval target in the retrieval image, displaying an identifier of each retrieval target in the retrieval image based on the location information; wherein, an identifier of an image of each retrieval target is displayed in the image list, and an identifier of a retrieval target in the retrieval image corresponds to an identifier of an image of this retrieval target in the image list.
the apparatus further comprises:
a second identifier display module configured for, after determining the location information of each retrieval target in the retrieval image, displaying, in the retrieval image, an identifier indicating that a retrieval target is not selected based on the location information;
a third identifier display module configured for, after displaying the image list, displaying, in the image list for an image of the retrieval target, an identifier indicating that the image of the retrieval target is not selected;
the emphasized display module is configured for, in case that the image of any retrieval target of the at least one retrieval target is selected in the image list, replacing an identifier indicating that the retrieval target corresponding to the selected image is not selected with an identifier indicating that the retrieval target is selected, in the retrieval image, and replacing an identifier indicating that the selected image is not selected with an identifier indicating that the selected image is selected, in the image list;
the emphasized display module is configured for displaying, in an emphasized manner in the retrieval image, a selection box and/or an identifier of the retrieval target corresponding to the selected image, and displaying, in an emphasized manner in the image list, a selection box and/or an identifier of the image of the retrieval target corresponding to the selected image;
the image of the retrieval target is an image comprising the retrieval target extracted from the retrieval image, there is a one-to-one correspondence between the image of the retrieval target and the retrieval target.

15. An information retrieval apparatus, comprising:
an location information obtaining module, configured for obtaining location information of a target monitoring device determined based on a retrieval condition, wherein the retrieval condition comprises an image of a retrieval target and candidate monitoring devices, the target monitoring device is a monitoring device that has captured images among which there is a captured image matching the image of the retrieval target, among the candidate monitoring devices comprised in the retrieval condition;
a fourth identifier display module, configured for displaying, on a map, an identifier indicating that the target monitoring device has captured an image of the retrieval target based on the location information.

16. The apparatus according to claim 15, wherein,
the fourth identifier display module is configured for determining a display location of the target monitoring device on the map based on the location information, and displaying the identifier indicating that the target monitoring device has captured the image of the retrieval target at the display location; wherein the location information is a location of the target monitoring device on the map or a geographic location of the target monitoring device;
wherein, the identifier indicating that the target monitoring device has captured the image of the retrieval target comprises at least one of the following: a location identifier of the target monitoring device, a specified image among captured images captured by the target monitoring device matching the image of the retrieval target, and a display icon, wherein the display icon is configured to indicate the total number of the captured images captured by the target monitoring device matching the image of the retrieval target;
the apparatus further comprises:
a second image obtaining module, configured for obtaining captured images captured by the target monitoring device matching the image of the retrieval target;
an image display module configured for, in the case of obtaining a display instruction for the captured images captured by the target monitoring device matching the image of the retrieval target, displaying the captured images according to an order of corresponding capture time or an order of similarity, wherein the similarity is a similarity between each captured image and the image of the retrieval target comprised in the retrieval condition, the display instruction is triggered based on the identifier indicating that the target monitoring device has captured the image of the retrieval target;
there are multiple target monitoring devices;
the fourth identifier display module is configured for obtaining multiple target map images corresponding to the multiple target monitoring devices; and displaying identifiers indicating that the multiple target monitoring devices have captured images of the retrieval target in the multiple target map images based on the location information;
the fourth identifier display module is configured for, for each specified map image of the multiple target map images, when the specified map image is displayed in a preset window, displaying an identifier of a corresponding target monitoring device indicating that the image of the retrieval target has been captured in the specified map image and displaying a thumbnail of a non-specified map image corresponding to the specific map image among the target map images at a display location different from that of the preset window;
the apparatus further comprises:
a time obtaining module, configured for obtaining capture time of captured images captured by target monitoring devices matching the image of the retrieval target;
a trajectory display module, configured for displaying a travel trajectory of the retrieval target on the map based on the location information of the target monitoring devices and the capture time.

17. An electronic device comprising a processor and a memory, wherein:
the memory is configured to store a computer program;
the processor is configured to implement the method according to any one of claims 1 to 6 or claims 7 to 12 when executing the program stored in the memory.

18. A computer-readable storage medium having stored therein a computer program which, when executed by a processor, causes the processor to implement the method of detecting a falling action according to any one of claims 1 to 6 or claims 7 to 12.

19. A computer program product containing instructions which, when executed by a computer, causes the computer to implement the method according to any one of claims 1 to 6 or claims 7 to 12.
